# FASCICULE DE BREVET EUROPEEN

(11) **EP 3 207 230 B1**
(45) Date de publication et mention de la délivrance du brevet: **30.03.2022**
(21) Numéro de dépôt: 15771678.8
(22) Date de dépôt: 10.09.2015
(51) Int. Cl.: F01P 3/02, F01P 11/02, F16J 15/06

(54) **JOINT DE CULASSE PRÉSENTANT UNE OUVERTURE DE DÉGAZAGE**
ZYLINDERKOPFDICHTUNG MIT EINER ENTGASUNGSÖFFNUNG
CYLINDER HEAD GASKET HAVING A DEGASSING OPENING

(30) Priorité: 17.10.2014 FR 1460014
(43) Date de publication de la demande: 23.08.2017
(73) Titulaire: Renault s.a.s, 92100 Boulogne Billancourt (FR)
(72) Inventeur: LE-LAGADEC, Jean-Pierre, F-92800 Puteaux (FR)
(74) Mandataire: Renault Group
(86) Numéro de dépôt international: PCT/FR2015/052403
(87) Numéro de publication internationale: WO 2016/059309

(56) Documents cités:
- DE-U1-202010 006 768
- DE-U1-202010 006 768
- FR-A1- 2 873 777
- FR-A1- 2 873 777
- GB-A- 2 510 820
- GB-A- 2 510 820
- US-A1- 2005 279 295
- US-A1- 2005 279 295
- US-A1- 2006 125 187
- US-A1- 2013 161 250

## Description

### DOMAINE TECHNIQUE AUQUEL SE RAPPORTE L'INVENTION

La présente invention concerne de manière générale le refroidissement d'un moteur à combustion interne.

Elle concerne plus particulièrement un ou plusieurs joint(s) de culasse à interposer entre un carter-cylindres et une ou plusieurs culasse(s) d'un bloc-moteur, comportant au moins une plaque traversée par :
- au moins une large ouverture adaptée à venir en correspondance avec un alésage de cylindre du carter-cylindres, et
- au moins une petite ouverture, dite ouverture de dégazage, adaptée à venir en correspondance avec un conduit de dégazage d'un circuit de circulation de liquide de refroidissement dans le carter-cylindres.

La description qui suit concerne un joint de culasse disposé entre une culasse et un carter-cylindres mais il va de soi que l'invention peut également concerner des moteurs présentant une architecture en V ou autres avec un carter-cylindres et deux ou plusieurs culasses.

L'invention concerne également un bloc-moteur comportant un carter-cylindres, un carter d'huile fixé sous le carter-cylindres, une culasse fixée sur le carter-cylindres, un circuit de circulation d'un liquide de refroidissement qui traverse le carter-cylindres et la culasse, et un joint de culasse tel que précité.

L'invention trouve une application particulièrement avantageuse dans la fabrication d'un moteur à combustion interne dont le circuit de refroidissement comporte deux branches séparées, l'une pour refroidir la culasse et l'autre pour refroidir le carter-cylindres.

### ARRIERE-PLAN TECHNOLOGIQUE

Un bloc-moteur est généralement constitué de quatre parties principales, dont un carter-cylindres qui présente des alésages dans lesquels coulissent des pistons, un carter d'huile qui est fixé sous le carter-cylindres et qui renferme de l'huile destinée à lubrifier les différents organes du bloc-moteur, une culasse qui est fixée sur le carter-cylindres et qui loge des soupapes, et un couvre-culasse qui recouvre la culasse.

Un joint de culasse est couramment utilisé à la jonction entre le carter-cylindres et la culasse, pour assurer l'étanchéité entre ces deux composants.

Un tel joint de culasse présente de multiples ouvertures, les plus larges étant situées au niveau des alésages du carter-cylindres, d'autres permettant le passage de vis de fixation de la culasse sur le carter-cylindres.

Dans le cas où le carter-cylindres et la culasse sont refroidis par une branche commune d'un circuit de refroidissement (ladite branche commune traversant successivement le carter-cylindres et la culasse), le joint de culasse présente en outre des ouvertures de passage du liquide de refroidissement, et de petites ouvertures de dégazage, permettant d'évacuer l'air enfermé dans le circuit de refroidissement vers un bocal de dégazage.

Dans le cas où le carter-cylindres et la culasse sont respectivement refroidis par deux branches distinctes du circuit de refroidissement (selon une technologie communément désignée par l'expression anglaise « split cooling »), le joint de culasse présente uniquement de petites ouvertures de dégazage.

Cette technologie de refroidissement par deux branches distinctes permet au carter-cylindres de monter plus rapidement en température que la culasse, ce qui assure notamment une réduction des rejets polluants au démarrage du moteur. Elle permet également de refroidir la culasse et le carter-cylindres à des températures différentes, chacune adaptée aux composants du bloc-moteur.

Quel que soit le type de circuit de refroidissement utilisé (à une branche commune ou à deux branches distinctes), on cherche à minimiser la circulation de liquide de refroidissement au travers des ouvertures de dégazage du joint de culasse.

En effet, les fuites de liquide de refroidissement au travers des ouvertures de dégazage perturbent la circulation de liquide de refroidissement dans le circuit, ce qui ne permet pas d'assurer le refroidissement souhaité du bloc-moteur.

En outre, dans le cas où le circuit de refroidissement comporte deux branches distinctes, ces fuites ont pour conséquence de faire communiquer les deux branches du circuit de refroidissement entre elles, ce qui nuit à l'efficacité de la technologie employée. En effet, ces fuites empêchent alors une bonne montée en température du carter-cylindres. Elles ne permettent en outre pas de maintenir la culasse et le carter-cylindres à des températures aussi différentes que souhaité.

Pour obvier à ces différents problèmes, une solution connue pour fabriquer le joint de culasse consiste à empiler plusieurs plaques de telle sorte que les ouvertures de dégazage percées dans ces plaques se trouvent désaxées les unes par rapport aux autres. L'objectif de cette solution est de réduire le débit de liquide de refroidissement traversant les ouvertures de dégazage.

La publication DE202010006768 - U1 propose un joint plat métallique avec de larges ouvertures de passages de fluide et de petites ouvertures partiellement obturées par des tamis de filtrage, lesdits tamis sont formés par des grilles et sont conçus pour retenir des particules d'usure dans un circuit d'huile. Lesdits tamis ne sont pas conçus pour interdire le passage de liquide tout en autorisant le passage de gaz.

En pratique, cette solution présente une efficacité contestable. Elle s'avère en outre difficile à industrialiser puisqu'elle nécessite une grande précision pour positionner les plaques du joint de culasse les unes au-dessus des autres, de telle sorte que leurs ouvertures de dégazage ne se superposent que partiellement.

### OBJET DE L'INVENTION

Afin de remédier aux inconvénients précités de l'état de la technique, la présente invention propose une nouvelle solution pour empêcher la circulation de liquide de refroidissement au travers des ouvertures de dégazage du joint de culasse.

Plus particulièrement, on propose selon l'invention un joint de culasse tel que défini dans l'introduction, dans lequel il est prévu une membrane qui obture ladite ouverture de dégazage, dont la porosité est strictement supérieure à la porosité de ladite au moins une plaque. L'ouverture de dégazage est de diamètre inférieur à 5 mm, et la porosité de la membrane permet le passage de fluides en phase gazeuse mais elle interdit le passage de fluides en phase liquide au travers de ladite ouverture de dégazage.

Ainsi, grâce à l'invention, la membrane poreuse va permettre le passage de l'air au travers de l'ouverture de dégazage, mais elle va interdire la circulation de liquide au travers de cette ouverture de dégazage.

Le joint de culasse va donc permettre d'assurer une bonne circulation du liquide de refroidissement dans le carter-cylindres et dans la culasse, ce qui permettra de refroidir le bloc-moteur de la manière souhaitée.

D'autres caractéristiques avantageuses et non limitatives du joint de culasse conforme à l'invention sont les suivantes :
- ladite membrane présente une rigidité supérieure à celle de ladite plaque ;
- il est prévu au moins deux plaques empilées, dont les ouvertures de dégazage se superposent complètement et qui prennent ladite membrane en sandwich ;
- il est prévu au moins quatre plaques empilées de telle sorte que leurs ouvertures de dégazage se superposent complètement, deux premières desdites plaques étant situées aux extrémités de l'empilement des plaques, et deux secondes plaques prenant ladite membrane en sandwich et présentant des rigidités supérieures à celles desdites premières plaques ;
- ladite membrane s'étend sur une partie seulement de la surface de ladite plaque ;
- ladite membrane est fixée à ladite plaque selon une ligne qui s'étend tout autour de ladite ouverture de dégazage ; et
- ladite membrane est réalisée en matière imper-respirante.

L'invention concerne également un bloc-moteur tel que défini en introduction, qui comporte un joint de culasse tel que précité, qui s'interpose entre le carter-cylindres et la culasse.

Avantageusement, le circuit de refroidissement comporte deux branches distinctes qui s'étendent respectivement dans le carter-cylindres et dans la culasse.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un joint de culasse conforme à l'invention ;
- la figure 2 est une vue en coupe d'une partie du joint de culasse de la figure 1, sur laquelle apparaît une ouverture de dégazage ; et
- la figure 3 est une vue homologue de celle de la figure 2, illustrant un autre mode de réalisation du joint de culasse représenté sur la figure 1.

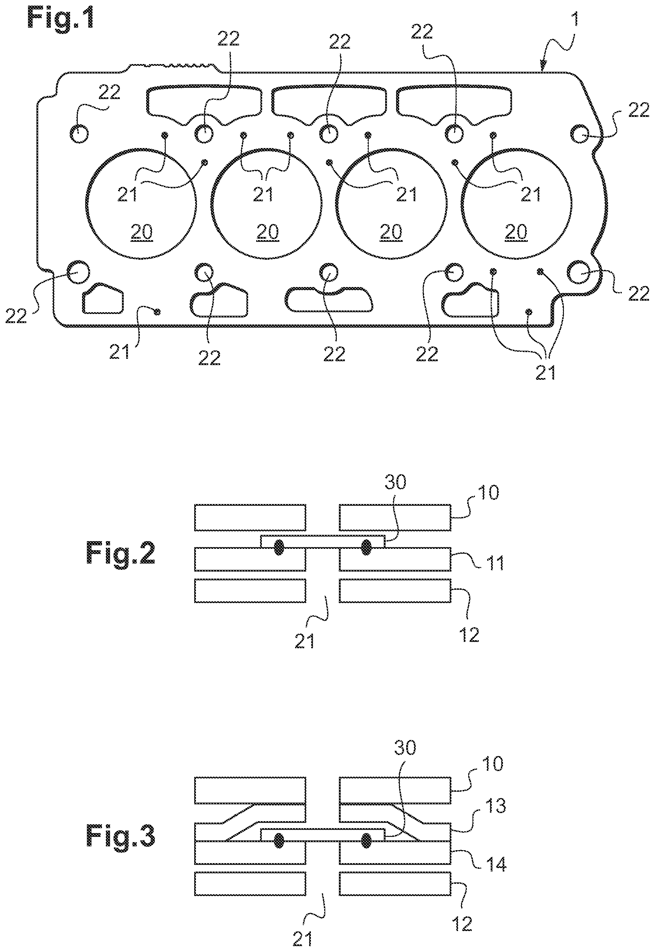

Sur la figure 1, on a représenté un joint de culasse 1 prévu pour assurer l'étanchéité d'un bloc-moteur d'un moteur à combustion interne.

Un tel bloc-moteur se présente généralement en quatre parties principales, dont un carter-cylindres, un carter d'huile qui est fixé sous le carter-cylindres et qui renferme de l'huile destinée à lubrifier les différents organes du moteur, une culasse qui est fixée sur le carter-cylindres et un couvre-culasse qui recouvre la culasse.

On peut définir le carter-cylindres comme étant le lieu de la combustion d'air frais et de carburant, et la culasse comme étant le lieu où l'arrivée d'air frais et l'échappement de gaz brûlés sont régulés.

Plus précisément, le carter-cylindres présente des alésages de cylindres qui logent chacun un piston adapté à coulisser selon un mouvement rectiligne alternatif (ou mouvement de va-et-vient) d'axe confondu avec l'axe de l'alésage de cylindre. On considérera ici que le carter-cylindres présente quatre alésages de cylindres en lignes. Chaque piston est relié à un vilebrequin par l'intermédiaire d'une bielle adaptée à transformer le mouvement rectiligne alternatif du piston en mouvement de rotation du vilebrequin.

Pour l'admission en air frais de chaque alésage de cylindre, la culasse est percée d'un conduit d'admission qui s'étend jusqu'à une ouverture d'admission prévue dans une face inférieure de la culasse. Pour l'échappement des gaz brûlés en dehors de chaque alésage de cylindre, la culasse est percée d'un conduit d'échappement qui prend naissance dans une ouverture d'échappement adjacente à l'ouverture d'admission. Pour réguler les débits d'arrivée d'air frais et de sortie de gaz brûlés dans chaque alésage de cylindre, la culasse comporte des soupapes d'admission et des soupapes d'échappement dont les extrémités évasées obturent les ouvertures d'admission et d'échappement des conduits d'admission d'air frais et d'échappement des gaz brûlés. Ces soupapes d'admission et d'échappement sont classiquement commandées en position par des arbres à cames qui sont montés à rotation dans la culasse et qui sont liés en rotation au vilebrequin par l'intermédiaire d'un moyen d'entraînement tel qu'une courroie de distribution. Les cames de ces arbres à cames sont agencées pour appuyer périodiquement sur les soupapes de manière que chaque soupape se « lève » régulièrement afin de libérer un passage pour l'air frais ou les gaz brûlés.

Le bloc-moteur présente par ailleurs un conduit de circulation de liquide de refroidissement.

Ce conduit de circulation est prévu pour refroidir certains des composants du bloc-moteur. Il passe notamment à cet effet au pourtour des alésages de cylindres du carter-cylindres et au pourtour des conduits d'admission et d'échappement de la culasse.

Le conduit de circulation pourrait comporter une branche commune au carter-cylindres et à la culasse, qui traverse l'un et l'autre de ces éléments.

Ici, on considérera que le conduit de circulation de liquide de refroidissement comporte deux branches distinctes, dont une branche haute qui traverse exclusivement la culasse et une branche basse qui traverse exclusivement le carter-cylindres.

Ces deux branches ne communiquant pas l'une avec l'autre au sein du bloc-moteur, elles permettront de refroidir selon des stratégies différentes la culasse et le carter-cylindres.

Ce conduit de circulation comporte par ailleurs des conduits de dégazage qui prennent naissance dans ces deux branches et qui permettent d'évacuer les bulles d'air contenues dans le liquide de refroidissement vers un bocal de dégazage.

La présente invention porte alors plus précisément sur le joint de culasse 1 représenté sur la figure 1, qui est prévu pour s'interposer entre la face supérieure du carter-cylindres (sur laquelle débouche les alésages de cylindres) et la face inférieure de la culasse (sur laquelle débouchent les conduits d'admission et d'échappement).

Ce joint de culasse 1 est ainsi notamment prévu pour éviter que les gaz contenus dans les alésages de cylindres ne s'échappent de ces derniers autrement que par les conduits d'échappement.

Le joint de culasse 1 est un joint plat. Il est formé d'une ou plusieurs plaques (également appelées « feuilles »).

Comme le montre la figure 2, on considérera ici qu'il est formé d'un empilement de plusieurs plaques 10, 11, 12 qui présentent toutes des formes identiques et qui se superposent ainsi parfaitement.

Comme le montre la figure 1, le joint de culasse 1 présent ici un contour extérieur de forme globalement rectangulaire.

Il est traversé par de multiples ouvertures, de formes et de tailles différentes.

Il présente notamment quatre larges ouvertures circulaires 20, qui sont prévues pour se placer dans le prolongement des quatre alésages de cylindres du carter-cylindres.

Il présente également des ouvertures circulaires 22 de tailles moyennes, qui sont régulièrement réparties sur le pourtour du joint de culasse 1 et qui permettent le passage de vis prévues pour fixer la culasse sur le carter-cylindres.

Il présente aussi au moins une petite ouverture circulaire, dite ouverture de dégazage 21, de taille inférieure à celles des ouvertures circulaires 20, 22 précitées. En l'espèce, le joint de culasse 1 présente une pluralité d'ouvertures de dégazage adaptées à venir en correspondance avec les conduits de dégazage du circuit de circulation de liquide de refroidissement.

Ces ouvertures de dégazage 21 sont plus précisément prévues pour se placer dans le prolongement des conduits de dégazage qui prennent naissance dans la branche basse du circuit de circulation (celle qui traverse le carter-cylindres). Ces ouvertures de dégazage 21 présentent des diamètres inférieurs à 5 millimètres, généralement de l'ordre de 2 millimètres.

Le joint de culasse 1 présente enfin d'autres ouvertures de formes et de tailles variables, la plupart étant prévues pour se placer dans le prolongement d'évidements situés dans le bloc-moteur.

Selon une caractéristique particulièrement avantageuse de l'invention, le joint de culasse 1 comporte en outre une membrane 30 qui obture l'une au moins des ouvertures de dégazage 21 et dont la porosité est strictement supérieure à la porosité de l'empilement de plaques 10, 11, 12.

Ici, chaque ouverture de dégazage 21 est obturée par une membrane 30 telle que précitée.

On pourrait alors prévoir que la membrane 30 s'étende sur toute la surface des plaques 10, 11, 12. Toutefois, ici, il sera prévu autant de membranes 30 que d'ouverture de dégazage 21.

La porosité des membranes 30 est choisie de telle manière que les membranes 30 permettent le passage de l'air au travers des ouvertures de dégazage 21, mais qu'elles interdisent au moins partiellement la circulation de liquide de refroidissement au travers de ces ouvertures de dégazage 21.

On rappelle à ce sujet que la porosité est une grandeur physique qui définit les capacités d'écoulement et de rétention propres à un substrat (ici la membrane 30). Elle peut être quantifiée par une valeur numérique égale au rapport entre le volume de vide et le volume total du substrat.

La membrane 30 sera préférentiellement choisie pour limiter au mieux, voire pour interdire, la circulation de liquide de refroidissement au travers des ouvertures de dégazage 21.

A titre d'exemple, la membrane 30 pourra être formée par un tissu imper-respirant, par exemple de type Gore-Tex^{®} AVS39. Ce tissu est en effet adapté à l'utilisation qui en est faite, puisqu'il résiste à des températures de l'ordre 150°C et à des différences de pressions entre ses deux faces de l'ordre de 0,5 bar.

On pourra en variante utiliser un matériau différent, plus rigide que ce tissu microporeux, par exemple un matériau du type zéolithe. Dans cette variante, la membrane 30 ne se déformera pas lorsque la différence de pressions s'exerçant sur ses deux faces sera plus importante, c'est-à-dire lorsque les pressions dans les branches haute et basse du conduit de circulation seront très différentes. Autrement formulé, dans cette variante, les membranes 30 seront plus résistantes, ce qui permettra d'élever davantage la pression dans l'une des branches du conduit de circulation que dans l'autre (celle la plus chaude), afin de reculer le point d'ébullition du liquide de refroidissement dans cette branche uniquement.

Sur la figure 2, on a représenté une vue en coupe d'une partie du joint de culasse 1, au niveau de l'une des ouvertures de dégazage 21.

Comme le montre bien cette figure 2, le joint de culasse 1 comporte ici un empilement de trois plaques 10, 11, 12 traversées par l'ouverture de dégazage 21.

La membrane 30 est alors interposée entre deux de ces trois plaques 10, 11.

Cette membrane 30 présente une taille supérieure à celle de l'ouverture de dégazage 21, de manière à pouvoir l'obturer entièrement. Elle présente ici plus précisément une forme circulaire, dont le diamètre est inférieur à cinq fois le diamètre de l'ouverture de dégazage 21.

De manière préférentielle, la membrane 30 est fixée à l'une des plaques 10, 11, 12 de l'empilement, ici à la plaque 11 centrale de l'empilement, selon une ligne qui s'étend tout autour de ladite ouverture de dégazage 21. Elle y est ici fixée par soudure. Elle pourrait également y être fixée autrement, par exemple par collage.

Ici, la membrane 30 présente une raideur supérieure à celle de chacune des plaques 10, 11, 12 de l'empilement. Sa raideur est même supérieure à la raideur de l'empilement des trois plaques 10, 11, 12.

Sur la figure 3, on a représenté une vue en coupe d'une partie d'un second mode de réalisation du joint de culasse 1.

Dans ce mode de réalisation, le joint de culasse 1 comporte un empilement de plaques 10, 12, 13, 14 empilées de telle sorte que leurs ouvertures de dégazage 21 se superposent complètement.

Les plaques 10, 12 extérieures (celles situées aux extrémités de l'empilement) sont identiques à celles représentées sur la figure 2.

Les plaques 13, 14 intérieures, qui prennent la membrane 30 en sandwich, sont quant à elles différentes de la plaque intérieure 11 représentée sur la figure 2. Elles présentent en effet une raideur très supérieure à celle des deux plaques 10, 12 extérieures, ce qui permet à la membrane 30 de résister à de plus fortes différences de pressions s'exerçant sur ses deux faces.

La présente invention n'est nullement limitée aux modes de réalisation décrits et représentés, mais l'homme du métier saura y apporter toute variante comprise dans la portée des revendications ci-jointes.

En particulier, l'utilisation de membranes s'appliquera également au cas où le circuit de circulation de liquide de refroidissement présente une unique branche commune au carter-cylindres et à la culasse. Dans ce cas, les membranes empêcheront en effet le liquide de refroidissement d'emprunter un chemin non désiré, en fuyant au travers des ouvertures de dégazage.

## Revendications

1. Joint de culasse (1) à interposer entre un carter-cylindres et une culasse d'un bloc-moteur qui est équipé d'un circuit de circulation d'un liquide de refroidissement, comportant au moins une plaque (10, 11, 12, 13, 14) traversée par :
- au moins une large ouverture (20) adaptée à venir en correspondance avec un alésage de cylindre du carter-cylindres, et
- au moins une petite ouverture, dite ouverture de dégazage (21), de diamètre inférieur à 5mm, adaptée à venir en correspondance avec un conduit de dégazage dudit circuit de circulation,
**caractérisé en ce qu'**il comporte une membrane (30) qui obture ladite ouverture de dégazage (21) et dont la porosité est strictement supérieure à la porosité de ladite au moins une plaque (10, 11, 12, 13, 14) et telle que ladite membrane (30) permet le passage de fluides en phase gazeuse et qu'elle interdit le passage de fluides en phase liquide au travers de ladite ouverture de dégazage (21).

2. Joint de culasse (1) selon la revendication précédente, dans lequel ladite membrane (30) présente une rigidité supérieure à celle de ladite plaque (10, 11, 12, 13, 14).

3. Joint de culasse (1) selon l'une des revendications précédentes, dans lequel il est prévu au moins deux plaques (10, 11, 12, 13, 14) empilées, dont les ouvertures de dégazage (21) se superposent complètement et qui prennent ladite membrane (30) en sandwich.

4. Joint de culasse (1) selon l'une des revendications précédentes, dans lequel il est prévu au moins quatre plaques (10, 12, 13, 14) empilées de telle sorte que leurs ouvertures de dégazage (21) se superposent complètement, deux premières desdites plaques (10, 12) étant situées aux extrémités de l'empilement des plaques (10, 12, 13, 14), et deux secondes plaques (13, 14) prenant ladite membrane (30) en sandwich et présentant des rigidités supérieures à celles desdites premières plaques (10, 12).

5. Joint de culasse (1) selon l'une des revendications précédentes, dans lequel ladite membrane (30) s'étend sur une partie seulement de la surface de ladite plaque (10, 11, 12, 13, 14).

6. Joint de culasse (1) selon l'une des revendications précédentes, dans lequel ladite membrane (30) est fixée à ladite plaque (10, 11, 12, 13, 14) selon une ligne qui s'étend tout autour de ladite ouverture de dégazage (21).

7. Joint de culasse (1) selon l'une des revendications précédentes, dans lequel ladite membrane (30) est réalisée en matière imper-respirante.

8. Bloc-moteur comportant :
- un carter-cylindres,
- un carter d'huile fixé sous le carter-cylindres,
- une culasse fixée sur le carter-cylindres, et
- un circuit de circulation d'un liquide de refroidissement qui traverse le carter-cylindres et la culasse,
**caractérisé en ce qu'**il comporte un joint de culasse (1) selon l'une des revendications précédentes, qui s'interpose entre le carter-cylindres et la culasse.

9. Bloc-moteur selon la revendication précédente, dans lequel le circuit de refroidissement comporte deux branches distinctes qui s'étendent respectivement dans le carter-cylindres et dans la culasse.

## Patentansprüche

1. Zylinderkopfdichtung (1), die zwischen einem Zylinderkurbelgehäuse und einem Zylinderkopf eines Motorblocks anzuordnen ist, welcher mit einem Kühlflüsssigkeitskreislauf ausgestattet ist, mindestens eine Platte (10, 11, 12, 13, 14) aufweisend, die durchquert wird von:
- mindestens einer großen Öffnung (20), die dafür eingerichtet ist, mit einer Zylinderbohrung des Zylinderkurbelgehäuses in Übereinstimmung zu kommen, und
- mindestens einer kleinen Öffnung, Entgasungsöffnung (21) genannt, mit einem Durchmesser von weniger als 5 mm, die dafür eingerichtet ist, mit einer Entgasungsleitung des Kreislaufs in Übereinstimmung zu kommen,
**dadurch gekennzeichnet, dass** sie eine Membran (30) aufweist, welche die Entgasungsöffnung (21) verschließt und deren Porosität streng größer als die Porosität der mindestens einen Platte (10, 11, 12, 13, 14) ist und so beschaffen ist, dass die Membran (30) den Durchgang von Fluiden in gasförmiger Phase ermöglicht und dass sie den Durchgang von Fluiden in flüssiger Phase durch die Entgasungsöffnung (21) verhindert.

2. Zylinderkopfdichtung (1) nach dem vorhergehenden Anspruch, wobei die Membran (30) eine Steifigkeit aufweist, die größer als diejenige der Platte (10, 11, 12, 13, 14) ist.

3. Zylinderkopfdichtung (1) nach einem der vorhergehenden Ansprüche, wobei mindestens zwei gestapelte Platten (10, 11, 12, 13, 14) vorgesehen sind, deren Entgasungsöffnungen (21) sich vollständig überlagern und welche die Membran (30) sandwichartig einschließen.

4. Zylinderkopfdichtung (1) nach einem der vorhergehenden Ansprüche, wobei mindestens vier Platten (10, 12, 13, 14) vorgesehen sind, die derart gestapelt sind, dass ihre Entgasungsöffnungen (21) sich vollständig überlagern, wobei sich zwei erste der Platten (10, 12) an den Enden des Stapels der Platten (10, 12, 13, 14) befinden und zwei zweite Platten (13, 14) die Membran (30) sandwichartig einschließen und Steifigkeiten aufweisen, die größer als diejenigen der ersten Platten (10, 12) sind.

5. Zylinderkopfdichtung (1) nach einem der vorhergehenden Ansprüche, wobei sich die Membran (30) nur auf einem Teil der Oberfläche der Platte (10, 11, 12, 13, 14) erstreckt.

6. Zylinderkopfdichtung (1) nach einem der vorhergehenden Ansprüche, wobei die Membran (30) an der Platte (10, 11, 12, 13, 14) entlang einer Linie befestigt ist, welche sich rings um die Entgasungsöffnung (21) herum erstreckt.

7. Zylinderkopfdichtung (1) nach einem der vorhergehenden Ansprüche, wobei die Membran (30) aus atmungsfähigem Material hergestellt ist.

8. Motorblock, welcher aufweist:
- ein Zylinderkurbelgehäuse,
- eine Ölwanne, die unter dem Zylinderkurbelgehäuse befestigt ist,
- einen Zylinderkopf, der auf dem Zylinderkurbelgehäuse befestigt ist, und
- einen Kühlflüsssigkeitskreislauf, welcher das Zylinderkurbelgehäuse und den Zylinderkopf durchquert,
**dadurch gekennzeichnet, dass** er eine Zylinderkopfdichtung (1) nach einem der vorhergehenden Ansprüche aufweist, welche zwischen dem Zylinderkurbelgehäuse und dem Zylinderkopf angeordnet ist.

9. Motorblock nach dem vorhergehenden Anspruch, wobei der Kühlkreislauf zwei getrennte Zweige aufweist, welche sich im Zylinderkurbelgehäuse bzw. im Zylinderkopf erstrecken.

## Claims

1. Cylinder head gasket (1) to be interposed between a crank case and a cylinder head of an engine block which is equipped with a circuit for circulating a cooling liquid, comprising at least one plate (10, 11, 12, 13, 14) traversed by:
- at least one wide opening (20) adapted to come into register with a cylinder bore of the crank case, and
- at least one small opening, termed degassing opening (21), having a diameter of less than 5 mm and adapted to come into register with a degassing duct of said circulating circuit,
**characterized in that** it comprises a membrane (30) which closes off said degassing opening (21) and the porosity of which is strictly greater than the porosity of said at least one plate (10, 11, 12, 13, 14) and such that said membrane (30) allows fluids in the gaseous phase to pass through said degassing opening (21) and prevents fluids in the liquid phase from passing through said degassing opening (21).

2. Cylinder head gasket (1) according to the preceding claim, wherein said membrane (30) has a stiffness greater than that of said plate (10, 11, 12, 13, 14) .

3. Cylinder head gasket (1) according to either of the preceding claims, wherein there are provided at least two stacked plates (10, 11, 12, 13, 14) whose degassing openings (21) completely overlap and which sandwich said membrane (30).

4. Cylinder head gasket (1) according to one of the preceding claims, wherein there are provided at least four stacked plates (10, 12, 13, 14) such that their degassing openings (21) completely overlap, two first said plates (10, 12) being situated at the ends of the stack of plates (10, 12, 13, 14), and two second plates (13, 14) sandwiching said membrane (30) and having stiffnesses which are greater than those of said first plates (10, 12).

5. Cylinder head gasket (1) according to one of the preceding claims, wherein said membrane (30) extends over only part of the surface of said plate (10, 11, 12, 13, 14).

6. Cylinder head gasket (1) according to one of the preceding claims, wherein said membrane (30) is fastened to said plate (10, 11, 12, 13, 14) along a line which extends all-around said degassing opening (21) .

7. Cylinder head gasket (1) according to one of the preceding claims, wherein said membrane (30) is made of waterproof, breathable material.

8. Engine block comprising:
- a crank case,
- an oil sump fastened below the crank case,
- a cylinder head fastened to the crank case, and
- a circuit for circulating a cooling liquid that passes through the crank case and the cylinder head, **characterized in that** it comprises a cylinder head gasket (1) according to one of the preceding claims that is interposed between the crank case and the cylinder head.

9. Engine block according to the proceeding claim, wherein the cooling circuit comprises two separate branches which extend respectively in the crank case and in the cylinder head.
